# EUROPÄISCHE PATENTSCHRIFT

(11) **EP 2 398 663 B1**
(45) Veröffentlichungstag und Bekanntmachung des Hinweises auf die Patenterteilung: **03.04.2013**
(21) Anmeldenummer: 10701628.9
(22) Anmeldetag: 27.01.2010
(51) Int. Cl.: B60K 6/365, B60K 6/543, B60K 6/48, B60K 6/40

(54) **HYBRIDANTRIEBSVORRICHTUNG**
HYBRID DRIVE UNIT
DISPOSITIF D'ENTRAÎNEMENT HYBRIDE

(30) Priorität: 21.02.2009 DE 102009010065
(43) Veröffentlichungstag der Anmeldung: 28.12.2011
(73) Patentinhaber: Daimler AG, 70327 Stuttgart (DE)
(72) Erfinder: APPELTAUER, Peter, 70736 Fellbach (DE)
(74) Vertreter: JENSEN & SON
(86) Internationale Anmeldenummer: PCT/EP2010/000471
(87) Internationale Veröffentlichungsnummer: WO 2010/094389

(56) Entgegenhaltungen:
- EP-A1- 1 900 564
- EP-A2- 0 845 618
- DE-A1- 10 160 884
- DE-A1- 19 849 156
- DE-A1-102006 059 591
- US-A1- 2005 107 204
- US-A1- 2010 173 746

## Beschreibung

Die Erfindung betrifft eine Hybridantriebsvorrichtung nach dem Oberbegriff des Anspruchs 1 bzw 15, siehe US 2005/01072204 A.

Es sind bereits Hybridantriebsvorrichtungen mit einem Abtriebsmittel, mit einem Primärantriebsmittel zur permanenten Anbindung einer Primärantriebsmaschine, mit einem Zahnräderwechselsatz zur Herstellung einer formschlüssigen Verbindung zwischen dem Primärantriebsmittel und dem Abtriebsmittel, mit einem Sekundärantriebsmittel zur permanenten Anbindung einer Sekundärantriebsmaschine, und mit einem Planetenradsatz, der permanent mit dem Primärantriebsmittel und dem Sekundärantriebsmittel gekoppelt ist, bekannt.

DE 102006059591 A1 zeigt eine Hybridantriebsvorrichtung mit einem Verbrennungsmotor als Primärantriebsmaschine und einem Elektromotor als Sekundärantriebsmaschine. Hierbei ist der Elektromotor permanent und der Verbrennungsmotor über eine Kupplung, also nicht permanent, mit einem Planetenradsatz verbunden. Der Abtrieb des Planetenradsatzes ist fest mit einem Eingang eines ersten Teilgetriebes verbunden. Ein Eingang eines zweiten Teilgetriebes ist über die Kupplung mit dem Verbrennungsmotor verbunden.

Die Hybridantriebsvorrichtung gemäß DE 19849156 A1 weist einen Verbrennungsmotor als Primärantriebsmaschine und einen Elektromotor als Sekundärantriebsmaschine auf, wobei der Verbrennungsmotor über eine Kupplung und der Elektromotor permanent mit einem Planetenradsatz verbunden sind. Der Abtrieb des Planetenradsatzes ist fest mit einer Getriebeausgangswelle eines Zahnräderwechselgetriebes verbunden. Die Eingangswelle des Zahnräderwechselgetriebes ist über die Kupplung mit dem Verbrennungsmotor verbunden.

Aus der EP 1900564 A1 ist eine Hybridantriebsvorrichtung mit einem Verbrennungsmotor als Primärantriebsmaschine und einem Elektromotor als Sekundärantriebsmaschine bekannt, bei dem die beiden Antriebsmaschinen über einen Planetenradsatz gekoppelt sind.

Der Abtrieb des Planetenradsatzes ist fest mit einem Eingang eines Hauptgetriebes in Planetenbauweise verbunden.

Der Erfindung liegt insbesondere die Aufgabe zugrunde, ein Hybridantriebsmodul mit einer besonders vorteilhaften Kraftflussverteilung zu realisieren. Sie wird gemäß der Erfindung durch die Merkmale des Anspruchs 1 und alternativ des Anspruchs 15 gelöst. Weitere Ausgestaltungen ergeben sich aus den Unteransprüchen.

Die Erfindung geht aus von einer Hybridantriebsvorrichtung mit einem Abtriebsmittel, mit einem Primärantriebsmittel zur permanenten Anbindung einer Primärantriebsmaschine, mit einem Zahnräderwechselsatz zur Herstellung einer formschlüssigen Verbindung zwischen dem Primärantriebsmittel und dem Abtriebsmittel, mit einem Sekundärantriebsmittel zur permanenten Anbindung einer Sekundärantriebsmaschine, und mit einem Planetenradsatz, der permanent mit dem Primärantriebsmittel und dem Sekundärantriebsmittel gekoppelt ist.

Der Planetenradsatz ist in zumindest einem Betriebsmodus in einem Kraftfluss parallel zu dem Zahnräderwechselsatz angeordnet. Dadurch kann ein Kraftfluss in der Hybridantriebsvorrichtung aufgesplittet werden, wodurch eine besonders vorteilhafte Kraftflussverteilung innerhalb der Hybridantriebsvorrichtung realisiert werden kann. Unter "in einem Kraftfluss parallel" soll dabei insbesondere verstanden werden, dass ein über den Zahnräderwechselsatz geleiteter Kraftfluss zumindest teilweise über den Planetenradsatz übertragbar ist. Vorzugsweise ist eine Größe des über den Planetenradsatz geleiteten Kraftflusses einstellbar.

Erfindungsgemäß ist der Zahnräderwechselsatz zumindest teilweise räumlich zwischen dem Primärantriebsmittel und dem Sekundärantriebsmittel angeordnet. Dadurch kann eine kompakte Ausgestaltung mit einer vorteilhaften Erreichbarkeit von einzelnen Komponenten realisiert werden. Vorzugsweise ist der Zahnräderwechselsatz vollständig zwischen dem Primärantriebsmittel und dem Sekundärantriebsmittel angeordnet.

Unter einem "Abtriebsmittel" soll weiter insbesondere ein Mittel verstanden werden, das zur Anbindung von einem Achsantrieb vorgesehen ist, wie beispielsweise ein Zahnrad zur Anbindung eines Differentialgetriebes. Unter einem "Primärantriebsmittel" soll insbesondere ein Mittel zur drehfesten Verbindung mit einem momentabgebenden und/oder momentaufnehmenden Bauteil der Primärantriebsmaschine verstanden werden, wie beispielsweise ein Flansch und/oder eine Welle zur permanenten drehfesten Verbindung mit einer Kurbelwelle einer Brennkraftmaschine. Unter einem "Sekundärantriebsmittel" soll insbesondere ein Mittel zur drehfesten Verbindung mit einem momentabgebenden und/oder momentaufnehmenden Bauteil der Sekundärantriebsmaschine verstanden werden, wie beispielsweise ein Flansch und/oder eine Welle zur permanenten drehfesten Verbindung mit einer Rotorwelle eines Elektromotors. Unter "vorgesehen" soll insbesondere speziell ausgestattet und/oder ausgelegt verstanden werden.

Weiter wird vorgeschlagen, dass der Planetenradsatz dazu vorgesehen ist, eine Abtriebsmitteldrehzahl und/oder ein Abtriebsmittelmoment einzustellen. Dadurch kann der Zahnräderwechselsatz in zumindest einem Betriebsmodus mittels des Planetenradsatzes lastfrei geschaltet werden, wodurch insbesondere ein Schaltverhalten der Hybridantriebsvorrichtung vorteilhaft auf einen Kundenbedarf angepasst werden kann. Unter einer "Abtriebsmitteldrehzahl" soll dabei insbesondere ein Wert einer Drehzahl des Abtriebsmittels verstanden werden. Unter einem "Abtriebsmittelmoment" soll insbesondere ein von dem Abtriebsmittel übertragenes Moment verstanden werden.

In einer besonders vorteilhaften Ausgestaltung ist der Planetenradsatz in zumindest einem Betriebsmodus dazu vorgesehen, den Zahnräderwechselsatz zu synchronisieren. Dadurch kann auf eine aufwendige Synchronisiereinheit des Zahnräderwechselsatzes, beispielsweise mittels reibschlüssig synchronisierten Schaltmitteln, verzichtet werden, wodurch eine besonders einfache Ausgestaltung des Zahnräderwechselsatzes erreicht werden kann. Unter einem "Zahnräderwechselsatz" soll insbesondere eine Anordnung von zumindest zwei Zahnradpaarungen verstanden werden, die zur Herstellung verschiedener Getriebeübersetzungen wahlweise schaltbar sind, wobei unter einer "Zahnradpaarung" insbesondere eine Anordnung von zumindest zwei miteinander kämmenden Zahnrädern verstanden werden soll. Unter einem "Synchronisieren des Zahnräderwechselsatzes" soll insbesondere eine Drehzahlanpassung zur Herstellung einer drehfesten Verbindung in dem Zahnräderwechselsatz verstanden werden. Unter einem "Schaltmittel" soll insbesondere ein schaltbares Mittel zur Herstellung einer formschlüssigen, drehfesten Verbindung verstanden werden. Vorzugsweise wird in dem zumindest einen Betriebsmodus zumindest ein Schaltmittel des Zahnräderwechselsatzes mittels des Planetenradsatzes synchronisiert.

Weiter wird vorgeschlagen, dass der Planetenradsatz in zumindest einem Betriebsmodus dazu vorgesehen ist, einen für das Abtriebsmittel vorgesehenen Kraftfluss vollständig zu übertragen. Dadurch kann eine Übertragung des Kraftflusses vorteilhaft auf den Betriebsmodus angepasst werden. Vorzugsweise ist der zumindest eine Betriebsmodus als ein Schaltmodus zur Schaltung des Zahnräderwechselsatzes ausgebildet. Dadurch kann während der Schaltung des Zahnräderwechselsatzes ein Abtriebsmittelmoment ungleich Null eingestellt werden, wodurch die Hybridantriebsvorrichtung lastunterbrechungsfrei geschaltet werden kann. Zudem kann dadurch in einem Schaltvorgang, bei dem insbesondere eine Drehzahl der Primärantriebsmaschine verringert wird, eine in der Primärantriebsmaschine und in der Hybridantriebsvorrichtung gespeicherte kinetische Energie dem Abtriebsmittel zugeführt und somit in effektiv verfügbare Antriebsleistung umgewandelt werden. Insbesondere die in der Primärantriebsmaschine gespeicherte kinetische Energie, die aufgrund einer hohen Schwungmasse der Primärantriebsmaschine einen hohen Betrag aufweisen kann, kann dadurch vorteilhaft rekuperativ wieder genutzt werden. Unter einem "Übertragen eines Abtriebsmittelmoments" soll insbesondere eine Übertragung eines Kraftflusses verstanden werden, mittels dem zumindest ein Teil eines an dem Abtriebsmittel anliegenden Moments bereitgestellt wird.

Weiter wird vorgeschlagen, dass die Hybridantriebsvorrichtung eine Lastschaltkupplungseinheit aufweist, die wirkungsmäßig zwischen dem Primärantriebsmittel und dem Zahnräderwechselsatz angeordnet ist. Dadurch kann der Zahnräderwechselsatz in zumindest einem Betriebsmodus vorteilhaft zumindest teilweise von dem Primärantriebsmittel entkoppelt werden, wodurch ein Schaltverhalten des Zahnräderwechselsatzes verbessert und somit ein Kundenkomfort erhöht werden kann. Da die Lastschaltkupplungseinheit, die eine hohe Schwungmasse aufweisen kann, über das Primärantriebsmittel und den Planetenradsatz mit dem Abtriebsmittel koppelbar ist, kann zudem eine in der Lastschaltkupplungseinheit gespeicherte kinetische Energie bei einer Verringerung einer Drehzahl der Lastschaltkupplungseinheit vorteilhaft rekuperativ genutzt bzw. in ein effektiv nutzbares Antriebsmoment umgewandelt werden. Unter einer "Lastschaltkupplungseinheit" soll dabei eine Kupplungseinheit zur Herstellung einer drehfesten Verbindung verstanden werden, die dazu vorgesehen ist, unter Last von einem Schaltzustand in einen anderen Schaltzustand geschaltet zu werden, wie beispielsweise eine Reiblamellenkupplung. Grundsätzlich sind beliebige Koppeleinheiten, die wirkungsmäßig zwischen dem Primärantriebsmittel und dem Zahnräderwechselsatz angeordnet sind, denkbar.

In einer weiteren Ausgestaltung wird vorgeschlagen, dass die Hybridantriebsvorrichtung zumindest zwei voneinander entkoppelbare Antriebswellen umfasst, von denen eine zur Anbindung des Planetenradsatzes und eine zur Anbindung des Zahnräderwechselsatzes vorgesehen ist. Dadurch kann eine besonders vorteilhafte Ausgestaltung des Zahnräderwechselsatzes bzw. der Anbindung des Zahnräderwechselsatzes erreicht werden. Vorteilhafterweise ist die Lastschaltkupplungseinheit wirkungsmäßig zwischen den beiden Antriebswellen angeordnet, wodurch eine besonders vorteilhafte Ausgestaltung erreicht werden kann.

In einer besonders vorteilhaften Ausgestaltung ist eine der Antriebswellen als eine Hohlwelle ausgeführt, die von der anderen Antriebswelle durchsetzt wird. Dadurch kann eine kompakte Ausgestaltung und eine vorteilhafte Anbindung des Planetenradsatzes und des Zahnräderwechselsatzes realisiert werden.

Weiter wird vorgeschlagen, dass der Zahnräderwechselsatz zumindest zwei Zahnräder aufweist, die auf einer der Antriebswellen angeordnet sind. Dadurch kann einfach ein Zahnräderwechselsatz mit einer hohen Schaltbarkeit erreicht werden.

Vorzugsweise sind die auf der Antriebswelle angeordneten Zahnräder des Zahnräderwechselsatzes als Festräder ausgeführt. Dadurch kann eine besonders vorteilhafte Ausgestaltung des Zahnräderwechselsatzes realisiert werden.

Ferner wird vorgeschlagen, dass die als Hohlwelle ausgeführte Antriebswelle für den Zahnräderwechselsatz vorgesehen ist. Dadurch kann eine vorteilhafte Anordnung des Primärantriebsmittels und des Sekundärantriebsmittels an gegenüberliegenden Seiten der Hybridantriebsvorrichtung realisiert werden. Grundsätzlich ist es aber auch denkbar, die als Hohlwelle ausgeführte Antriebswelle für den Planetenradsatz vorzusehen, beispielsweise um die Primärantriebseinheit und die Sekundärantriebseinheit auf einer Seite der Hybridantriebsvorrichtung anzuordnen.

In einer Weiterbildung der Erfindung wird vorgeschlagen, dass die Hybridantriebsvorrichtung zumindest eine Abtriebswelle und zumindest zwei für den Zahnräderwechselsatz vorgesehene Zahnräder, die auf der zumindest einen Abtriebswelle angeordnet sind, umfasst. Dadurch kann eine kompakte Ausbildung des Zahnräderwechselsatzes erreicht werden, mittels dem das Primärantriebsmittel formschlüssig mit dem Abtriebsmittel verbunden werden kann.

Vorzugsweise sind die auf der zumindest einen Abtriebswelle angeordneten Zahnräder zumindest teilweise als Losräder ausgeführt, die dazu vorgesehen sind, drehfest mit der zumindest einen Abtriebswelle verbunden zu werden. Dadurch kann einfach eine Schaltbarkeit des Zahnräderwechselsatzes erreicht werden.

Weiter wird vorgeschlagen, dass die Hybridantriebsvorrichtung zumindest ein auf der Abtriebswelle angeordnetes Zahnrad aufweist, das für eine formschlüssige Anbindung des Planetenradsatzes vorgesehen ist. Dadurch kann eine vorteilhafte Anbindung des Planetenradsatzes erfolgen. Insbesondere kann dadurch zumindest eine Abtriebswelle bereitgestellt werden, die mittels des Planetenradsatzes und mittels des Zahnräderwechselsatzes antreibbar ist.

In einer alternativen Ausgestaltung gemäß Anspruch 15 umfasst die Hybridantriebsvorrichtung zumindest zwei zumindest teilweise analog ausgestaltete Abtriebswellen, die mittels des Zahnräderwechselsatzes und mittels des Planetenradsatzes antreibbar sind. Dadurch kann eine Anzahl von schaltbaren Getriebegängen bei einer geringen Anzahl von Zahnrädern auf der Antriebswelle erhöht werden, wodurch eine axial besonders kompakte Ausgestaltung mit einer hohen Anzahl von Getriebegängen realisiert werden kann. Unter "zumindest teilweise analog ausgestaltet" soll dabei verstanden werden, dass die Abtriebswellen in Bezug auf zumindest eine Funktion und/oder in Bezug auf zumindest eine Ausgestaltung gleich ausgeführt sind.

Weitere Vorteile ergeben sich aus der folgenden Zeichnungsbeschreibung. In der Zeichnung ist ein Ausführungsbeispiel der Erfindung dargestellt.

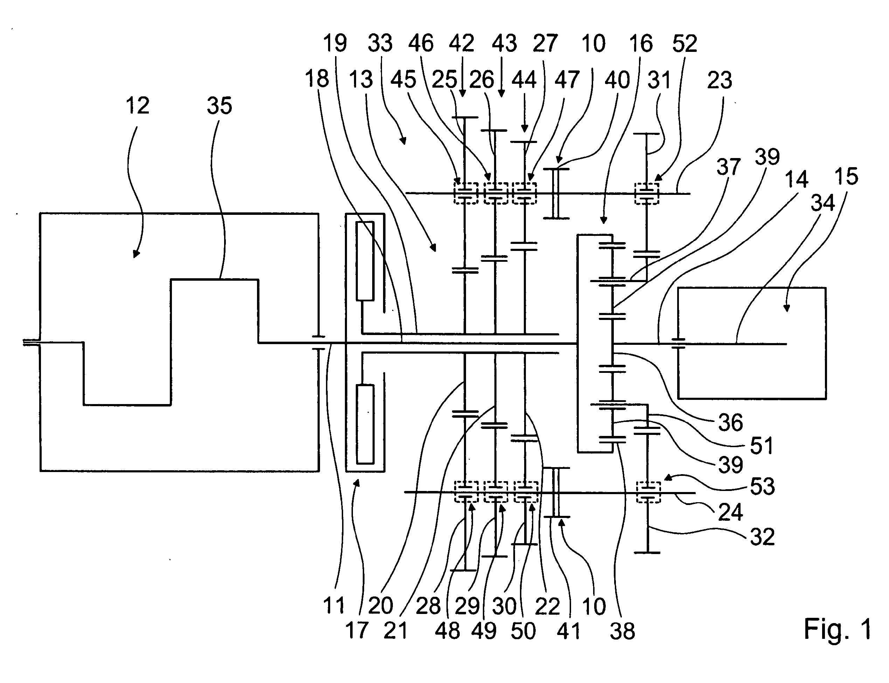

Figur 1 zeigt einen Teil eines Kraftfahrzeugsantriebsstrangs. Der Kraftfahrzeugantriebsstrang weist eine Primärantriebsmaschine 12, eine Sekundärantriebsmaschine 15 und eine Hybridantriebsvorrichtung 33 auf. Ein an die Hybridantriebsvorrichtung 33 angebundener Achsantrieb des Kraftfahrzeugantriebsstrangs ist nicht näher dargestellt. Die Primärantriebsmaschine 12 ist mittels einer Brennkraftmaschine ausgebildet. Die Sekundärantriebsmaschine 15 ist mittels eines Elektromotors ausgebildet. Außerdem weist die Hybridantriebsvorrichtung 33 eine Steuereinheit auf, mittels der aktive Komponenten der Hybridantriebsvorrichtung 33 gesteuert und/oder geregelt werden können.

Die Primärantriebsmaschine 12 ist insbesondere für eine Momentabgabe vorgesehen. Mittels der Steuereinheit kann für die Primärantriebsmaschine 12 ein Primärmoment vorgegeben werden, das größer als Null ist. Aufgrund eines inneren Hemmmoments ist die Primärantriebsmaschine 12 auch für eine Momentaufnahme, d.h. für ein Primärmoment kleiner als Null, vorgesehen.

Die Sekundärantriebsmaschine 15 ist mit einer nicht näher dargestellten Leistungselektronik verbunden, mittels der die Sekundärantriebsmaschine 15 mit einem nicht näher dargestellten Energiespeicher verbunden ist. Mittels der Leistungselektronik und des Energiespeichers ist die Sekundärantriebsmaschine 15 für eine aktive Momentenaufnahme und für eine aktive Momentenabgabe vorgesehen. Das Sekundärmoment in zwischen einem unteren Grenzwert, der kleiner als Null ist, und einem oberen Grenzwert, der größer als Null ist, stufenlos einstellbar.

Grundsätzlich sind auch andere Primärantriebsmaschinen 12 und/oder andere Sekundärantriebsmaschinen 15 denkbar. Die Sekundärantriebsmaschine 15 kann beispielsweise alternativ mittels eines hydraulischen, hydropneumatischen, pneumatischen und/oder mechanischen Energiespeichers ausgebildet werden.

Die Hybridantriebsvorrichtung 33 weist ein Primärantriebsmittel 11 zur permanenten Anbindung der Primärantriebsmaschine 12, ein Sekundärantriebsmittel 14 zur permanenten Anbindung der Sekundärantriebsmaschine 15 und ein Abtriebsmittel 10 zur Anbindung des Achsantriebs auf. Das Primärantriebsmittel 11 ist drehfest mit einer Kurbelwelle 35 der als Brennkraftmaschine ausgebildeten Primärantriebsmaschine 12 verbunden. Das Sekundärantriebsmittel 14 ist drehfest mit einer Rotorwelle 34 der Sekundärantriebsmaschine 15 verbunden. Das Abtriebsmittel 10 ist permanent mit dem nicht näher dargestellten Achsantrieb verbunden.

Das Abtriebsmittel 10 des dargestellten Kraftfahrzeugsantriebsstrangs ist für einen Quereinbau in ein Kraftfahrzeug vorgesehen. Grundsätzlich kann die Hybridantriebsvorrichtung 33 auch für einen Längseinbau vorgesehen werden. Ebenfalls denkbar ist eine Kombination mit einem Allradantriebsmodul, das für einen Antrieb von mehr als einer Antriebsachse vorgesehen ist.

Weiter weist die Hybridantriebsvorrichtung 33 einen Zahnräderwechselsatz 13 auf, mittels dem eine formschlüssige Verbindung zwischen dem Primärantriebsmittel 11 und dem Abtriebsmittel 10 hergestellt werden kann. Der Zahnräderwechselsatz 13 weist zumindest zwei Zahnradpaare auf, mittels denen unterschiedliche Übersetzungsverhältnisse bereitgestellt sind. Die unterschiedlichen Übersetzungsverhältnisse der Zahnradpaare sind zur Herstellung unterschiedlicher Getriebeübersetzungen vorgesehen, die durch einen Wechsel der Zahnradpaare geschaltet werden. Mittels des Zahnräderwechselsatzes 13 sind in der dargestellten Ausführung sechs Getriebegänge schaltbar, die jeweils unterschiedliche Übersetzungsverhältnisse aufweisen.

Ferner weist die Hybridantriebsvorrichtung 33 einen Planetenradsatz 16 auf, der permanent mit dem Primärantriebsmittel 11 und dem Sekundärantriebsmittel 14 verbunden ist. Der Planetenradsatz 16 weist ein Sonnenrad 36, einen Planetenradträger 37 und ein Hohlrad 38 auf. Weiter weist der Planetenradsatz 16 zumindest ein Planetenrad 39 auf, das mittels des Planetenradträgers 37 auf einer Kreisbahn geführt wird und das mit dem Sonnenrad 36 und dem Hohlrad 38 kämmt. Das Hohlrad 38 des Planetenradsatzes 16 ist drehfest mit dem Primärantriebsmittel 11 verbunden. Das Sonnenrad 36 des Planetenradsatzes 16 ist drehfest mit dem Sekundärantriebsmittel 14 verbunden. Der Planetenradträger 37 des Planetenradsatzes 16 ist dazu vorgesehen, formschlüssig mit dem Abtriebsmittel 10 verbunden zu werden. Der Planetenradsatz 16 ist somit formschlüssig mit dem Abtriebsmittel 10 koppelbar.

In zumindest einem Betriebsmodus verbindet der Planetenradsatz 16 das Primärantriebsmittel 11, das Sekundärantriebsmittel 14 und das Abtriebsmittel 10 wirkungsmäßig miteinander. In einem solchen Betriebsmodus ist der Planetenradsatz 16 in einem Kraftfluss parallel zu einem Kraftfluss durch den Zahnräderwechselsatz 13 angeordnet. Mittels des Planetenradsatzes 16 werden in zumindest einem Betriebsmodus eine Abtriebsmitteldrehzahl und ein Abtriebsmittelmoment des Abtriebsmittels 10 eingestellt.

Der Planetenradsatz 16 und der Zahnräderwechselsatz 13 sind für eine Leistungsverzweigung vorgesehen. Der Planetenradsatz 16 und der Zahnräderwechselsatz 13 stellen zwei unterschiedliche Kraftflüsse zwischen dem Primärantriebsmittel 11, dem Sekundärantriebsmittel 14 und dem Abtriebsmittel 10 bereit. Insbesondere das an dem Primärantriebsmittel 11 eingeleitete Primärmoment wird in zumindest einem Betriebsmodus einstellbar auf den Zahnräderwechselsatz 13 und den Planetenradsatz 16 aufgesplittet. Eine Einstellung der Leistungsverzweigung erfolgt mittels des Sekundärantriebsmittels 14.

Das Primärantriebsmittel 11 und das Sekundärantriebsmittel 14 sind koaxial zueinander angeordnet. Entlang einer axialen Haupterstreckungsrichtung der Hybridantriebsvorrichtung 33 ist das Primärantriebsmittel 11 auf einer ersten Seite der Hybridantriebsvorrichtung 33 angeordnet. Das Sekundärantriebsmittel 14 ist entlang der Haupterstreckungsrichtung auf einer dem Primärantriebsmittel 11 gegenüberliegenden zweiten Seite der Hybridantriebsvorrichtung 33 angeordnet. Die Hybridantriebsvorrichtung 33 ist räumlich zumindest größtenteils zwischen der Primärantriebsmaschine 12 und der Sekundärantriebsmaschine 15 angeordnet.

Zur Anbindung des Zahnräderwechselsatzes 13 weist die Hybridantriebsvorrichtung 33 eine Lastschaltkupplungseinheit 17 auf, die in einem Kraftfluss zwischen dem Primärantriebsmittel 11 und dem Zahnräderwechselsatz 13 angeordnet ist. Zur Anbindung des Zahnräderwechselsatzes 13 weist die Hybridantriebsvorrichtung 33 eine Antriebswelle 19 auf, die an die Lastschaltkupplungseinheit 17 anbindet. Die Lastschaltkupplungseinheit 17 weist zwei Kupplungselemente auf, von denen eines drehfest mit dem Primärantriebsmittel 11 und eines drehfest mit der Antriebswelle 19 verbunden ist. Das mit dem Primärantriebsmittel 11 verbundene Kupplungselement ist als ein Kupplungskäfig ausgeführt, der für eine reibschlüssige Verbindung mit dem zweiten, als Reibscheibe ausgeführten Kupplungselement vorgesehen ist.

Zur Anbindung des Planetenradsatzes 16 weist die Hybridantriebsvorrichtung 33 eine weitere Antriebswelle 18 auf, die die Lastschaltkupplungseinheit 17 und den Zahnräderwechselsatz 13 durchsetzt. Die Antriebswelle 18 ist drehfest mit dem Primärantriebsmittel 11 verbunden. Sie verbindet das Primärantriebsmittel 11 drehfest mit dem Hohlrad 38 des Planetenradsatzes 16. Die Antriebswelle 19 zur Anbindung des Zahnräderwechselsatzes 13 ist als eine Hohlwelle ausgeführt, die von der Antriebswelle 18 zur Anbindung des Planetenradsatzes 16 durchsetzt ist. Die zwei Antriebswellen 18, 19 sind koaxial zueinander angeordnet. Durch die Lastschaltkupplungseinheit 17 sind die beiden Antriebswellen 18, 19 voneinander entkoppelbar.

Zur Anbindung des Abtriebsmittels 10 weist die Hybridantriebsvorrichtung 33 zwei Abtriebswellen 23, 24 auf, die parallel versetzt zu den Antriebswellen 18, 19 angeordnet sind. Das Abtriebsmittel 10 weist zwei Zahnräder 40, 41 auf, die auf jeweils einer der Abtriebswellen 23, 24 angeordnet sind. Beide Zahnräder 40, 41 des Abtriebsmittels 10 sind als Festräder ausgeführt. Die Zahnräder 40, 41 kämmen jeweils mit einem nicht näher dargestellten, ebenfalls als Stirnrad ausgebildeten Endabtriebsrad. Das Abtriebsmittel 10 verbindet die beiden Abtriebswellen 23, 24 formschlüssig miteinander, wodurch ein Drehzahlverhältnis zwischen den beiden Abtriebswellen 23, 24 stets definiert ist. In dem dargestellten Ausführungsbeispiel weisen die beiden Zahnräder 40, 41 eine gleiche Zahnzahl auf, weshalb die beiden Abtriebswellen 23, 24 stets die gleiche Abtriebsmitteldrehzahl aufweisen. Grundsätzlich ist es aber auch denkbar, die Zahnräder 40, 41 mit unterschiedlichen Zahnzahlen auszuführen.

Der Zahnräderwechselsatz 13 weist in dem dargestellten Ausführungsbeispiel drei Zahnradebenen 42, 43, 44 auf. In jeder der Zahnradebenen 42, 43, 44 sind drei Zahnräder 20, 21, 22, 25, 26, 27, 28, 29, 30 angeordnet. Die auf der Antriebswelle 19 angeordneten Zahnräder 20, 21, 22 sind als Primärzahnräder ausgeführt. Sie kämmen jeweils mit zwei der weiteren Zahnräder 25, 26, 27, 28, 29, 30, die als Sekundärzahnräder ausgeführt sind. Die als Sekundärzahnräder ausgeführten Zahnräder 25, 26, 27, 28, 29, 30 sind auf den Abtriebswellen 23, 24 angeordnet. Die Abtriebswellen 23, 24 sind in unterschiedlichen Abständen zu der für den Zahnräderwechselsatz 13 vorgesehenen Antriebswelle 19 angeordnet. Mittels des Zahnräderwechselsatzes 13 sind die beiden Abtriebswellen 23, 24 formschlüssig mit der Antriebswelle 19 verbindbar.

Mittels der neun Zahnräder 20, 21, 22, 25, 26, 27, 28, 29, 30 sind sechs Zahnradpaarungen realisiert. Die auf der Antriebswelle 19 angeordneten Zahnräder 20, 21, 22 sind dabei jeweils für zwei der Zahnradpaarungen vorgesehen. Aufgrund der unterschiedlichen Abstände der Abtriebswellen 23, 24 in Bezug auf die Antriebswelle 19 weisen sämtliche Zahnradpaarungen unterschiedliche Übersetzungsverhältnisse auf. Mittels des Zahnräderwechselsatzes 13 sind somit sechs unterschiedlich übersetzte Getriebegänge realisiert.

Die auf den Abtriebswellen 23, 24 angeordneten Zahnräder 25, 26, 27, 28, 29, 30 sind als Losräder ausgeführt. Zur Anbindung der Zahnräder 25, 26, 27, 28, 29, 30 an die Abtriebswellen 23, 24 weist der Zahnräderwechselsatz 13 sechs Schaltmittel 45, 46, 47, 48, 49, 50 auf, die vorzugsweise unabhängig voneinander schaltbar sind. Die Schaltmittel 45, 46, 47, 48, 49, 50 sind unsynchronisiert ausgeführt. Die Schaltmittel 45, 46, 47, 48, 49, 50 weisen jeweils eine Schaltstellung und eine Neutralstellung auf. In der Schaltstellung verbinden die Schaltmittel 45, 46, 47, 48, 49, 50 das zugehörige Zahnrad 25, 26, 27, 28, 29, 30 formschlüssig mit der jeweiligen Abtriebswelle 23, 24. In den Neutralstellungen sind die entsprechenden Zahnräder 25, 26, 27, 28, 29, 30 von der zugehörigen Abtriebswelle 23, 24 entkoppelt. Auf zwischen der Abtriebswelle 23, 24 und dem entsprechenden Zahnrad 25, 26, 27, 28, 29, 30 angeordnete Synchronisiermittel, die zur Herstellung einer reibschlüssigen Verbindung während einem Schaltvorgang vorgesehen sind, wird verzichtet. Die Schaltmittel 45, 46, 47, 48, 49, 50 sind als mittels einer Schiebemuffe schaltbare Klausenschaltungen ausgeführt. Grundsätzlich können die Schaltmittel 45, 46, 47, 48, 49, 50 auch teilweise einstückig für mehrere der Zahnräder 25, 26, 27, 28, 29, 30 vorgesehen sein, wie beispielsweise eine Ausgestaltung als beidseitig schaltbare Schiebemuffen.

Zur Anbindung des Planetenradsatzes 16 weist die Hybridantriebsvorrichtung 33 zwei weitere Zahnräder 31, 32 auf, die jeweils auf den Abtriebswellen 23, 24 angeordnet sind und die mit einem Zahnrad 51 kämmen, das drehfest mit dem Planetenradträger 37 des Planetenradsatzes 16 verbunden ist. Die beiden Zahnräder 31, 32 sind als Losräder ausgeführt. Sie sind unabhängig voneinander mit der jeweiligen Abtriebswelle 23, 24 verbindbar. Schaltmittel 52, 53 zur Schaltung der Zahnräder 31, 32 sind analog zu den Schaltmitteln 45, 46, 47, 48, 49, 50 des Zahnräderwechselsatzes 13 als unsynchronisierte Klauenschaltungen ausgeführt.

Aufgrund der unterschiedlichen Abstände der Abtriebswellen 23, 24 in Bezug auf die Antriebswelle 19 weisen die beiden Zahnräder 31, 32 zur Ankopplung des Planetenradsatzes 16 unterschiedliche Radien auf. Mittels der beiden Zahnräder 31, 32 sind unterschiedliche Übersetzungsverhältnisse für die Kopplung des Planetenradsatzes 16 mit den zwei Abtriebswellen 23, 24 ausgebildet. Durch die Kopplung der Abtriebswellen 23, 24 mittels des Abtriebsmittels 10 kann grundsätzlich auch auf eines der Zahnräder 31, 32 verzichtet werden. Das verbleibende Zahnrad der Zahnräder 31, 32 kann dann als ein Festrad ausgeführt werden. Prinzipiell kann auf eine Anordnung der zweiten Abtriebswelle 24 vollständig verzichtet werden.

Die Steuereinheit, mittels der für die Hybridantriebsvorrichtung 33 unterschiedliche Betriebsmodi schaltbar sind, ist zur Steuerung und Regelung der Schaltmittel 45, 46, 47, 48, 49, 50, 52, 53 und der Lastschaltkupplungseinheit 17 vorgesehen, die jeweils mittels aktiver Stellmittel schaltbar sind. Weiter ist die Steuereinheit dazu vorgesehen, das Primärmoment und die Primärantriebsdrehzahl der Primärantriebsmaschine 12 sowie das Sekundärmoment und die Sekundärantriebsdrehzahl der Sekundärantriebsmaschine 15 vorzugeben.

In sämtlichen, nachfolgend beschriebenen Betriebsmodi ist wahlweise eines der beiden Schaltmittel 52, 53 zur Anbindung des Planetenradsatzes 16 geschlossen. Der Planetenradsatz 16 ist in den Betriebsmodi permanent mit dem Abtriebsmittel 10 verbunden. Ein Schaltmodus, in dem eine Schaltstellung der Schaltmittel 52, 53 verändert wird, ist nicht näher beschrieben, kann aber analog zu einem nachfolgend beschriebenen Schaltmodus zum Schalten des Zahnräderwechselsatzes 13 ausgeführt werden.

Zum Starten der als Brennkraftmaschine ausgebildeten Primärantriebsmaschine 12 weist die Hybridantriebsvorrichtung 33 einen Startmodus auf. In dem Startmodus schaltet die Steuereinheit den Zahnräderwechselsatz 13 in eine Neutralstellung. In der Neutralstellung des Zahnräderwechselsatzes 13 sind die Abtriebswellen 23, 24 lediglich über den Planetenradsatz 16 mit dem Primärantriebsmittel 11 verbunden. Für den Startmodus aktiviert die Steuereinheit weiter eine nicht näher dargestellte Parksperre, mittels der das Abtriebsmittel 10 drehfest zu einem nicht näher dargestellten Getriebegehäuse angeordnet ist. Die Parksperre kann beispielsweise mittels einer Betriebsbremse des Kraftfahrzeugs realisiert werden. Ein anschließend mittels der Steuereinheit eingestelltes Sekundärmoment wird durch das drehfest angeordnete Abtriebsmittel 10 an das Primärantriebsmittel 11 geleitet, wodurch die Primärantriebsmaschine 12 mittels des Sekundärmoments gestartet werden kann.

Weiter weist die Hybridantriebsvorrichtung 33 einen Anfahrmodus auf, der zum Anfahren aus einem Stillstand vorgesehen ist. In dem Anfahrmodus ist die Primärdrehzahl ungleich Null. Die Steuereinheit gibt eine zu der Primärdrehzahl korrespondierende Sekundärdrehzahl vor, aufgrund der sich eine Abtriebsmitteldrehzahl gleich Null einstellt. Zum Schalten des Zahnräderwechselsatzes 13 öffnet die Steuereinheit die Lastschaltkupplungseinheit 17 und schaltet den Zahnräderwechselsatz 13 in einen zu schaltenden Getriebegang. Sobald der Getriebegang geschaltet ist, schließt die Steuereinheit sukzessive die Lastschaltkupplungseinheit 17, wodurch das am Primärantriebsmittel 11 eingeleitete Primärmoment über den Zahnräderwechselsatz 13 auf das Abtriebsmittel 10 übertragen wird.

Zusätzlich kann die Steuereinheit in dem Anfahrbetriebsmodus ein Sekundärmoment größer als Null vorgeben, das in den Anfahrmodus mittels des Planetenradsatzes 16 ebenfalls auf das Abtriebsmittel 10 übertragen wird.

Weiter weist die Hybridantriebsvorrichtung 33 einen Fahrmodus auf, in dem der Zahnräderwechselsatz 13 in einen definierten Getriebegang geschaltet und die Lastschaltkupplungseinheit 17 geschlossen ist. In dem Fahrbetriebsmodus ist das Primärantriebsmittel 11 stets formschlüssig mit dem Abtriebsmittel 10 verbunden. Über den Planetenradsatz 16 ist das Sekundärantriebsmittel 14 permanent mit dem Primärantriebsmittel 11 und permanent mit dem Abtriebsmittel 10 verbunden. In dem Fahrmodus sind der Zahnräderwechselsatz 13 und der Planetenradsatz 16 im Kraftfluss parallel angeordnet. Für den Fahrmodus ist die Hybridantriebsvorrichtung 33 für einen Boost-Modus zur Bereitstellung einer zusätzlichen kinetischen Energie und einen Energiespeichermodus zur Ausleitung einer kinetischen Energie vorgesehen.

In dem Boost-Modus gibt die Steuereinheit ein Sekundärmoment größer als Null vor, das mittels des Planetenradsatzes 16 zusätzlich zu dem bereits eingestellten Primärmoment an das Abtriebsmittel 10 übertragen wird. Das Abtriebsmittelmoment ist in Abhängigkeit von einer Summe des Primärmoments und des Sekundärmoments ausgebildet. Über das zusätzliche Sekundärmoment wird die zusätzliche kinetische Energie in die Hybridantriebsvorrichtung 33 eingebracht.

In dem Energie-Speichermodus gibt die Steuereinheit ein Sekundärmoment kleiner als Null vor. Dadurch wird ein in die Hybridantriebsvorrichtung 33 eingeleitetes Moment mittels des Sekundärantriebsmittels 14 ausgeleitet, wodurch kinetische Energie aus der Hybridantriebsvorrichtung 33 ausgeleitet wird und gespeichert werden kann. Das in die Hybridantriebsvorrichtung 33 eingeleitete Moment kann grundsätzlich mittels des Primärantriebsmittels 11 und/oder mittels des Abtriebsmittels 10 bereitgestellt werden. Wird das Moment mittels des Abtriebsmittels 10 eingeleitet, ist der Energie-Speichermodus als ein Rekuperationsmodus ausgebildet. Wird das Moment zusätzlich und/oder alternativ mittels des Primärantriebsmittels 11 eingeleitet, ist der Energie-Speichermodus zusätzlich und/oder alternativ als ein Lademodus ausgebildet. In dem Lademodus kann ein Teil des mittels des Primärantriebsmittels 11 eingeleiteten Moments an das Abtriebsmittel 10 weitergeleitet werden, wodurch gleichzeitig ein Vortrieb und eine Energiespeicherung erreicht werden kann.

Weiter ist die Hybridantriebsvorrichtung 33 für einen Hochschaltmodus zur lastunterbrechungsfreien Schaltung des Zahnräderwechselsatzes 13 vorgesehen. In dem Hochschaltmodus schaltet die Steuereinheit den Zahnräderwechselsatz 13 bei einer definierten Schaltdrehzahl unter Last von einem niedrigen Getriebegang in einen hohen Getriebegang. Zur Schaltung des Zahnräderwechselsatzes 13 stellt die Steuereinheit in einer ersten Phase des Hochschaltmodus eine Leistungsverzweigung ein, bei der der für das Abtriebsmittel 10 vorgesehene Kraftfluss vollständig über den Planetenradsatz 16 geleitet wird. In einer zweiten Phase des Hochschaltbetriebsmodus passt die Steuereinheit die Primärdrehzahl auf eine dem hohen Getriebegang angepasste Drehzahl an. In einer dritten Phase schaltet die Steuereinheit den hohen Getriebegang.

In der ersten Phase öffnet die Steuereinheit die Lastschaltkupplungseinheit 17 mit einem in der Steuereinheit hinterlegten Gradienten. Ein Öffnen der Lastschaltkupplungseinheit 17 beginnt kurz bevor die Primärdrehzahl die Schaltdrehzahl erreicht. Parallel dazu stellt die Steuereinheit ein Sekundärmoment größer als Null ein, wodurch das über das Primärantriebsmittel 11 eingeleitete Primärmoment zunehmend über den Planetenradsatz 16 geleitet wird. Sobald der über den Zahnräderwechselsatz 13 geleitete Kraftfluss ausreichend klein ist, reduziert die Steuereinheit das Primärmoment und schaltet den Zahnräderwechselsatz 13 in die Neutralstellung, indem sie das Primärmoment reduziert, bis das bisher geschaltete Schaltmittel der Schaltmittel 45, 46, 47, 48, 49, 50 zumindest weitgehend lastfrei in die Neutralstellung geschaltet werden kann. Der für das Abtriebsmittel 10 vorgesehene Kraftfluss wird dadurch vollständig über den Planetenradsatz 16 übertragen.

In der zweiten Phase bleibt die Lastschaltkupplungseinheit 17 zumindest teilweise geschlossen. Die Steuereinheit gibt ein Sekundärmoment vor, bei dem die Primärdrehzahl abfällt. Durch den Abfall der Primärdrehzahl wird eine in der Primärantriebsmaschine 12 und in der Hybridantriebsvorrichtung 33, insbesondere in der Lastschaltkupplungseinheit 17 gespeicherte kinetische Energie teilweise dem Abtriebsmittel 10 zugeführt. Da das von der Steuereinheit vorgegebene Sekundärmoment größer als Null ist, ist das Abtriebsmittelmoment ebenfalls größer als Null. Während der zweiten Phase regelt die Steuereinheit die Primärdrehzahl mittels des Primärmoments und des Sekundärmoments auf die dem hohen Getriebegang angepasste Drehzahl ein.

In der dritten Phase, in der die Primärdrehzahl die dem hohen Getriebegang angepasste Drehzahl aufweist, kann das dem hohen Getriebegang zugeordnete Schaltmittel der Schaltmittel 45, 46, 47, 48, 49, 50 lastfrei in seine Schaltstellung geschaltet werden. Dadurch ist das Primärantriebsmittel 11 mittels des Zahnräderwechselsatzes 13 wieder formschlüssig mit dem Abtriebsmittel 10 verbunden, wodurch die Schaltung des Zahnräderwechselsatzes 13 abgeschlossen ist. Die Lastschaltkupplungseinheit 17 kann während der dritten Phase teilweise schlupfend betrieben werden. Zum Abschluss des Hochschaltmodus wird die Lastschaltkupplungseinheit 17 vollständig geschlossen.

Weiter ist die Hybridantriebsvorrichtung 33 für einen lastunterbrechungsfreien Rückschaltmodus vorgesehen. In dem Rückschaltmodus schaltet die Steuereinheit den Zahnräderwechselsatz 13 bei einer definierten Schaltdrehzahl unter Last von einem hohen Getriebegang in einen niedrigen Getriebegang. In einer ersten Phase des Rückschaltmodus stellt die Steuereinheit eine Leistungsverzweigung ein, bei der der Kraftfluss vollständig über den Planetenradsatz 16 geleitet wird. In einer zweiten Phase des Rückschaltmodus passt die Steuereinheit die Primärdrehzahl auf eine dem niedrigen Getriebegang angepasste Drehzahl an. In einer dritten Phase schaltet die Steuereinheit den niedrigen Getriebegang. Der Rückschaltmodus erfolgt prinzipiell analog zu dem Hochschaltmodus. Unabhängig von einer Anordnung der Zahnradpaarungen des Zahnräderwechselsatzes 13 sind im Hochschaltmodus und im Rückschaltmodus sämtliche mittels des Zahnräderwechselsatzes 13 schaltbaren Getriebegänge untereinander lastschaltbar.

## Patentansprüche

1. Hybridantriebsvorrichtung mit einem Abtriebsmittel (10), mit einem Primärantriebsmittel (11) zur permanenten Anbindung einer Primärantriebsmaschine (12), mit einem Zahnräderwechselsatz (13) zur Herstellung einer formschlüssigen Verbindung zwischen dem Primärantriebsmittel (11) und dem Abtriebsmittel (10), mit einem Sekundärantriebsmittel (14) zur permanenten Anbindung einer Sekundärantriebsmaschine (15), und mit einem Planetenradsatz (16), der permanent mit dem Primärantriebsmittel (11) und dem Sekundärantriebsmittel (14) gekoppelt ist, wobei der Planetenradsatz (16) in zumindest einem Betriebsmodus in einem Kraftfluss parallel zu dem Zahnräderwechselsatz (13) angeordnet ist, **dadurch gekennzeichnet, dass** der Zahnräderwechselsatz (13) zumindest teilweise räumlich zwischen dem Primärantriebsmittel (11) und dem Sekundärantriebsmittel (14) angeordnet ist.

2. Hybridantriebsvorrichtung nach Anspruch 1,
**dadurch gekennzeichnet, dass**
der Planetenradsatz (16) dazu vorgesehen ist, eine Abtriebsmitteldrehzahl und/oder ein Abtriebsmittelmoment einzustellen.

3. Hybridantriebsvorrichtung nach Anspruch 1 oder 2,
**dadurch gekennzeichnet, dass**
der Planetenradsatz (16) in zumindest einem Betriebsmodus dazu vorgesehen ist, den Zahnräderwechselsatz (13) zu synchronisieren.

4. Hybridantriebsvorrichtung nach einem der vorhergehenden Ansprüche,
**dadurch gekennzeichnet, dass**
der Planetenradsatz (16) in zumindest einem Betriebsmodus dazu vorgesehen ist, einen für das Abtriebsmittel (10) vorgesehenen Kraftfluss vollständig zu übertragen.

5. Hybridantriebsvorrichtung nach einem der vorhergehenden Ansprüche,
**gekennzeichnet durch**
eine Lastschaltkupplungseinheit (17), die wirkungsmäßig zwischen dem Primärantriebsmittel (11) und dem Zahnräderwechselsatz (13) angeordnet ist.

6. Hybridantriebsvorrichtung nach einem der vorhergehenden Ansprüche,
**gekennzeichnet durch**
zumindest zwei voneinander entkoppelbare Antriebswellen (18, 19), von denen eine zur Anbindung des Planetenradsatzes (16) und eine zur Anbindung des Zahnräderwechselsatzes (13) vorgesehen ist.

7. Hybridantriebsvorrichtung nach Anspruch 6,
**dadurch gekennzeichnet, dass**
eine der Antriebswellen (19) als eine Hohlwelle ausgeführt ist, die von der anderen Antriebswelle (18) durchsetzt wird.

8. Hybridantriebsvorrichtung nach Anspruch 6 oder 7,
**dadurch gekennzeichnet, dass**
der Zahnräderwechselsatz (13) zumindest zwei Zahnräder (20, 21, 22) aufweist, die auf einer der Antriebswellen (19) angeordnet sind.

9. Hybridantriebsvorrichtung nach Anspruch 8,
**dadurch gekennzeichnet, dass**
die auf der Antriebswelle (19) angeordneten Zahnräder (20, 21, 22) des Zahnräderwechselsatzes (13) als Festräder ausgeführt sind.

10. Hybridantriebsvorrichtung zumindest nach Anspruch 6,
**dadurch gekennzeichnet, dass**
die als Hohlwelle ausgeführte Antriebswelle (19) für den Zahnräderwechselsatz (17) vorgesehen ist.

11. Hybridantriebsvorrichtung nach einem der vorhergehenden Ansprüche,
**gekennzeichnet durch**
zumindest eine Abtriebswelle (23, 24) und zumindest zwei für den Zahnräderwechselsatz (13) vorgesehene Zahnräder (25, 26, 27, 28, 29, 30), die auf der zumindest einen Abtriebswelle (23, 24) angeordnet sind.

12. Hybridantriebsvorrichtung nach Anspruch 11,
**dadurch gekennzeichnet, dass**
die auf der zumindest einen Abtriebswelle (23, 24) angeordneten Zahnräder (25, 26, 27, 28, 29, 30) zumindest teilweise als Losräder ausgeführt sind, die dazu vorgesehen sind, drehfest mit der zumindest einen Abtriebswelle (23, 24) verbunden zu werden.

13. Hybridantriebsvorrichtung zumindest nach Anspruch 11,
**gekennzeichnet durch**
zumindest ein auf der Abtriebswelle (23, 24) angeordnetes Zahnrad (31, 32), das für eine formschlüssige Anbindung des Planetenradsatzes (16) vorgesehen ist.

14. Hybridantriebsvorrichtung nach einem der vorhergehenden Ansprüche,
**gekennzeichnet durch**
zumindest zwei zumindest teilweise analog ausgestaltete Abtriebswellen (23, 24), die mittels des Zahnräderwechselsatzes (13) und mittels des Planetenradsatzes (16) antreibbar sind.

15. Hybridantriebsvorrichtung mit einem Abtriebsmittel (10), mit einem Primärantriebsmittel (11) zur permanenten Anbindung einer Primärantriebsmaschine (12), mit einem Zahnräderwechselsatz (13) zur Herstellung einer formschlüssigen Verbindung zwischen dem Primärantriebsmittel (11) und dem Abtriebsmittel (10), mit einem Sekundärantriebsmittel (14) zur permanenten Anbindung einer Sekundärantriebsmaschine (15), und mit einem Planetenradsatz (16), der permanent mit dem Primärantriebsmittel (11) und dem Sekundärantriebsmittel (14) gekoppelt ist, wobei der Planetenradsatz (16) in zumindest einem Betriebsmodus in einem Kraftfluss parallel zu dem Zahnräderwechselsatz (13) angeordnet ist,
**gekennzeichnet durch**
zwei Abtriebswellen (23, 24) zur Anbindung des Abtriebsmittels (10) und zwei Zahnräder (31, 32) zur Anbindung des Planetenradsatzes (10), die auf den Abtriebswellen (23, 24) angeordnet sind und die mit einem Zahnrad (51) kämmen, das drehfest mit einem Planetenradträger (37) des Planetenradsatzes (16) verbunden ist, wobei mittels der beiden Zahnräder (31, 32) unterschiedliche Übersetzungsverhältnisse für die Kopplung des Planetenradsatzes (16) mit den zwei Abtriebswellen (23, 24) ausgebildet sind.

## Claims

1. Hybrid drive unit comprising an output means (10), a primary drive means (11) for the permanent connection of a primary motor (12), a speed-change gear set (13) for establishing a positive connection between the primary drive means (11) and the output means (10), a secondary drive means (14) for the permanent connection of a secondary motor (15) and a planetary gear set (16) permanently coupled to the primary drive means (11) and the secondary drive means (14), wherein the planetary gear set (16) is placed in a power flow parallel to the speed-change gear set (13) in at least one operating mode,
**characterised in that**
the speed-change gear set (13) is at least partially arranged in the space between the primary drive means (11) and the secondary drive means (14).

2. Hybrid drive unit according to claim 1,
**characterised in that**
the planetary gear set (16) is provided for setting an output means speed and/or an output means torque.

3. Hybrid drive unit according to claim 1 or 2,
**characterised in that**
the planetary gear set (16) is in at least one operating mode provided for synchronising the speed-change gear set (13).

4. Hybrid drive unit according to any of the preceding claims,
**characterised in that**
the planetary gear set (16) is in at least one operating mode provided for completely transmitting a power flow provided for the output means (10).

5. Hybrid drive unit according to any of the preceding claims,
**characterised by**
a powershift clutch unit (17) which is arranged to act between the primary drive means (11) and the speed-change gear set (13).

6. Hybrid drive unit according to any of the preceding claims,
**characterised by**
at least two drive shafts (18, 19) which can be uncoupled from one another, of which one is provided for connecting the planetary gear set (16) and the other is provided for connecting the speed-change gear set (13).

7. Hybrid drive unit according to claim 6,
**characterised in that**
one of the drive shafts (19) is designed as a hollow shaft through which the other drive shaft (18) passes.

8. Hybrid drive unit according to claim 6 or 7,
**characterised in that**
the speed-change gear set (13) comprises at least two gears (20, 21, 22) which are arranged on one of the drive shafts (19).

9. Hybrid drive unit according to claim 8,
**characterised in that**
the gears (20, 21, 22) of the speed-change gear set (13) which are arranged on the drive shaft (19) are designed as fixed gears.

10. Hybrid drive unit at least according to claim 6,
**characterised in that**
the drive shaft (19) designed as a hollow shaft is provided for the speed-change gear set (13).

11. Hybrid drive unit according to any of the preceding claims,
**characterised by**
at least one output shaft (23, 24) and at least two gears (25, 26, 27, 28, 29, 30) provided for the speed-change gear set (13), which are mounted on the at least one output shaft (23, 24).

12. Hybrid drive unit according to claim 11,
**characterised in that**
the gears (25, 26, 27, 28, 29, 30) mounted on the at least one output shaft (23, 24) are at least partially designed as idler gears which are provided for the non-rotatable connection to the at least one output shaft (23, 24).

13. Hybrid drive unit at least according to claim 11,
**characterised by**
at least one gear (31, 32) mounted on the output shaft (23, 24) and provided for a positive connection of the planetary gear set (16).

14. Hybrid drive unit according to any of the preceding claims,
**characterised by**
at least two at least partially analogous output shafts (23, 24) which can be driven by means of the speed-change gear set (13) and by means of the planetary gear set (16).

15. Hybrid drive unit comprising an output means (10), a primary drive means (11) for the permanent connection of a primary motor (12), a speed-change gear set (13) for establishing a positive connection between the primary drive means (11) and the output means (10), a secondary drive means (14) for the permanent connection of a secondary motor (15) and a planetary gear set (16) permanently coupled to the primary drive means (11) and the secondary drive means (14), wherein the planetary gear set (16) is placed in a power flow parallel to the speed-change gear set (13) in at least one operating mode,
**characterised by**
two output shafts (23, 24) for connecting the output means (10) and two gears (31, 32) for connecting the planetary gear set (16), which are mounted on the output shafts (23, 24) and mesh with a gear (51) which is non-rotatably connected to a planet carrier (37) of the planetary gear set (16), wherein different ratios for coupling the planetary gear set (16) to the two output shafts (23, 24) are formed by means of the two gears (31, 32).

## Revendications

1. Dispositif d'entraînement hybride comprenant un moyen de sortie (10), un moyen d'entraînement primaire (11) à raccorder de manière permanente à un moteur d'entraînement primaire (12), un changement de vitesse (13) pour établir une liaison par complémentarité de forme entre le moyen d'entraînement primaire (11) et le moyen de sortie (10), un moyen d'entraînement secondaire (14) à relier de manière permanente à un moteur d'entraînement secondaire (15), et un jeu de roues planétaires (16) qui est couplé de manière permanente au moyen d'entraînement primaire (11) et au moyen d'entraînement secondaire (14), le jeu de roues planétaires (16) étant disposé au moins dans un mode de fonctionnement dans un flux de force parallèle au changement de vitesses (13), **caractérisé en ce que** le changement de vitesse (13) est disposé au moins spatialement entre le moyen d'entraînement primaire (11) et le moyen d'entraînement secondaire (14).

2. Dispositif d'entraînement hybride selon la revendication 1, **caractérisé en ce que** le jeu de roues planétaires (16) est prévu pour régler une vitesse de rotation du moyen de sortie et/ou d'un couple du moyen de sortie.

3. Dispositif d'entraînement hybride selon la revendication 1 ou la revendication 2, **caractérisé en ce que** le jeu de roues planétaires (16) est prévu dans au moins un mode de fonctionnement pour synchroniser le changement de vitesse (13).

4. Dispositif d'entraînement hybride selon l'une quelconque des revendications précédentes, **caractérisé en ce que** le jeu de roues planétaires (16) est prévu dans au moins un mode de fonctionnement pour transmettre entièrement le flux de force prévu pour le moyen de sortie (10).

5. Dispositif d'entraînement hybride selon l'une quelconque des revendications précédentes, **caractérisé par** une unité d'accouplement sous charge (17) qui est disposée de manière active entre le moyen d'entraînement primaire (11) et le changement de vitesse (13).

6. Dispositif d'entraînement hybride selon l'une quelconque des revendications précédentes, **caractérisé par** au moins deux arbres d'entraînement (18, 19) pouvant être découplés l'un de l'autre , dont l'un est prévu pour relier le jeu de roues planétaires (16) et l'autre pour relier le changement de vitesses (13).

7. Dispositif d'entraînement hybride selon la revendication 6, **caractérisé en ce qu'**un des arbres d'entraînement (19) est conçu comme un arbre creux, qui est traversé par l'autre arbre d'entraînement (18).

8. Dispositif d'entraînement hybride selon la revendication 6 ou la revendication 7, **caractérisé en ce que** le changement de vitesses (13) présente au moins deux roues dentées (20, 21, 22) qui sont disposées sur l'un des arbres d'entraînement (19).

9. Dispositif d'entraînement hybride selon la revendication 8, **caractérisé en ce que** les roues dentées (20, 21, 22) du changement de vitesses (13) disposées sur l'arbre d'entraînement (19) sont conçues comme des roues fixes.

10. Dispositif d'entraînement hybride selon la revendication 6, **caractérisé en ce que** l'arbre d'entraînement (19) conçu comme un arbre creux est prévu pour le changement de vitesses (17).

11. Dispositif d'entraînement hybride selon l'une quelconque des revendications précédentes **caractérisé par** un arbre de sortie (23, 24) et au moins deux roues dentées (25, 26, 27, 28, 29, 30) prévues pour le changement de vitesses (13), lesquelles sont disposées sur l'au moins un arbre de sortie (23, 24).

12. Dispositif d'entraînement hybride selon la revendication 11, **caractérisé en ce que** les roues dentées (25, 26, 27, 28. 29, 30) disposées sur l'au moins un arbre de sortie (23, 24) sont conçues au moins en partie comme pignon libre, lesquelles sont prévues pour être reliées en solidaire en rotation avec l'au moins un arbre de sortie (23, 24).

13. Dispositif d'entraînement hybride selon au moins la revendication 11, **caractérisé par** au moins une roue dentée (31, 32) disposée sur l'arbre de sortie (23, 24), laquelle est prévue pour une liaison par complémentarité de forme du jeu de roues planétaires (16).

14. Dispositif d'entraînement hybride selon l'une quelconque des revendications précédentes, **caractérisé par** au moins deux arbres de sortie (23, 24) partiellement identiques qui peuvent être entraînés au moyen du changement de vitesses (13) et au moyen du jeu de roues planétaires (16).

15. Dispositif d'entraînement hybride comprenant un moyen de sortie (10), un moyen d'entraînement primaire (11) à raccorder de manière permanente à un moteur d'entraînement primaire (12), un changement de vitesses (13) pour établir une liaison par complémentarité de forme entre le moyen d'entraînement primaire (11) et le moyen de sortie (10), un moyen d'entraînement secondaire (14) à relier de manière permanente à un moteur d'entraînement secondaire (15), et un jeu de roues planétaires (16) qui est couplé de manière permanente au moyen d'entraînement primaire (11) et au moyen d'entraînement secondaire (14), le jeu de roues planétaires (16) étant disposé au moins dans un mode d'entraînement dans un flux de force parallèle au changement de vitesses (13), **caractérisé par** deux arbres de sortie (23, 24) servant à relier le moyen de sortie (10) et par deux roues dentées (31, 32) servant à relier le jeu de roues planétaires (10), lesquelles sont disposées sur les arbres de sortie (23, 24) et qui s'engrènent avec une roue dentée (51) laquelle est reliée solidaire en rotation avec un support de roue planétaire (37) du jeu de roues planétaires (16), au moyen des deux roues dentées (31, 32) différents rapports de démultiplication étant réalisés pour accoupler le jeu de roues planétaires (16) aux deux arbres de sortie (23, 24).
